# EUROPEAN PATENT APPLICATION

(11) **EP 4 389 642 A1**
(43) Date of publication of application: **26.06.2024**
(21) Application number: 22215953.5
(22) Date of filing: 22.12.2022
(51) Int. Cl.: B65G 1/04

(54) **LOAD HANDING DEVICE**

(71) Applicant: MOVU, 9160 Lokeren (BE)
(72) Inventor: Tacq, Andries, 8700 Tielt (BE)
(74) Representative: IP HILLS NV

(57) **Abstract**

A load handing device is provided, the load handing device is adapted to transport payload in an automated warehouse comprising at least one lane with at least one level and being equipped with at least one shuttle adapted to move in horizontal direction on said at least one level of the lane. The load handing device comprises a load carrying means adapted to move in the vertical and/or horizontal direction, said load carrying means being provided with at least a first and a second fork. The load carrying means is provided with a support structure adapted to carry the shuttle during the vertical and/or horizontal movement of the load carrying means. At least one of the two forks is moveable between a first position and a second position. When this at least one of the two forks is in said first position, both forks together are adapted to carry a payload to said at least one level of the automated warehouse. When the at least one of the two forks is in said second position, said forks enabling said support structure to receive a shuttle from said at least one level of an automated warehouse.

## Description

### Field of the Invention

The present invention generally relates to load handing devices adapted to transport payload between levels of an automated warehouse comprising at least one lane with one or a plurality of levels and being equipped with at least one shuttle adapted to move in horizontal direction on different levels of the lane. The invention further relates to automated warehouse, automated multi-level warehouses and automated multi-level multi-lane warehouses, being equipped with at least one shuttle adapted to move in horizontal direction on one or different levels of the lane and comprising at least one load handing device

### Background of the Invention

Automated warehouses and automated warehouse shuttle systems are generally known. Warehouses may include relatively large storage structures, generally structured along a plurality of substantially parallel lanes. The storage structures are arranged to provide storage locations to goods, often palettized goods. These storage locations may be provided on a plurality of levels within the storage structure. In order to automate delivery and pick up of goods to and from said storage locations, automated warehouses can include an automated warehouse shuttle system. Said shuttle systems generally include a track system including at least one pair of rails arranged in a substantially horizontal plane along a lane of the warehouse, or more generally speaking, at least one pair of rails along each of the lanes of the warehouse, which are generally arranged substantially in parallel to each other, and more preferably, a pair of rails per level and per lane of the warehouse. Transverse aisles may connect said substantially parallel lanes, which transverse lanes may or may not be provided with tracks. The system further includes warehouse shuttles, in particular mobile robots, which are configured to move along said tracks, and which are configured to transport goods and/or goods carriers to and from said storage locations in the storage structure. An automated shuttles system can comprise a plurality of automated shuttles which are often integrated into, and controlled by, a central warehouse management control system.

Lift systems may be provided to lift the goods, often palettized goods, between various levels of the storage structure. These lift systems typically comprise one or more load handing devices. Such load handing devices may comprise a set of forks to carry the goods, referred to as payload. The forks carrying the payload, together with a load carrying means may vertically displace the payload to one of the levels of the warehouse, usually in front of a lane of the warehouse. Once brought at the level intended, the payload is put on a support structure in the lane, and/or is taken by a shuttle which will bring the payload to the intended position in the warehouse. The shuttles' movement may be restricted to different positions at one and the same level, via displacement on the tracks in the lanes and, if present, via the transverse aisles.

### Summary of the Invention

There is however a need for load handing devices which are adapted to easily and conveniently move shuttles from one level to another within the automated warehouse, e.g. when one level of the warehouse has a temporarily need for additional shuttles to transport the goods at said level. There is also a need for load handing devices which are adapted to easily and conveniently remove shuttle from one level and bring it to the level where the shuttle may be maintained and/or electrically recharged, or even be removed from the lane of the warehouse. This moving of shuttled between levels of the warehouse should provide little to no disturbance in the activity of the load handing devices displacing payload and should not disturb or complicate the control system controlling the warehouse activity.

According to a first aspect of the invention, a load handing device is provided, said load handing device is adapted to transport payload in an automated warehouse comprising at least one lane with at least one level and being equipped with at least one shuttle adapted to move in horizontal direction on said at least one level of the lane. The load handing device comprises a load carrying means adapted to move in the vertical and/or horizontal direction, said load carrying means being provided with at least a first and a second fork. The load carrying means is provided with a support structure adapted to carry the shuttle during the vertical and/or horizontal movement of the load carrying means. At least one of the two forks is moveable between a first position and a second position. When this at least one of the two forks is in said first position, both forks together are adapted to carry a payload to to said at least one level and/or, if applicable, between levels of the automated warehouse. When the at least one of the two forks is in said second position, said forks enabling said support structure to receive a shuttle from said at least one level of an automated warehouse. Preferably both forks are moveable between a first position and a second position for each fork.

Possibly a load handing device is provided, which load handling device is adapted to transport payload between levels of an automated warehouse comprising at least one lane with a plurality of levels and being equipped with at least one shuttle adapted to move in horizontal direction on different levels of the lane. The load handing device comprises a load carrying means adapted to move in the vertical direction, said load carrying means being provided with at least a first and a second fork and this load carrying means is provided with a support structure adapted to carry the shuttle during vertical movement of the load carrying means. At least one of the two forks is moveable between a first position and a second position. When this at least one of the two forks is in the first position, both forks together are adapted to carry a payload between levels of the automated warehouse. When this at least one of the two forks is in the second position, the forks enable the support structure to receive a shuttle from levels of an automated warehouse.

When this at least one of the two forks is in the first position, the forks may prevent or hinder the support structure to receive a shuttle from one or more levels of an automated warehouse. The load handing device comprises a load carrying means adapted to move in the vertical and/or horizontal direction, said load carrying means being provided with at least a first and a second fork, wherein at least one of the two forks is moveable between a first position and a second position, when said at least one of the two forks is in said first position, both forks together are adapted to carry a payload between levels of the automated warehouse, when said at least one of the two forks is in said second position, said forks so to say providing said support structure, which is adapted for transferring the shuttle from and to the at least one level, and/or optionally between the levels of the lane and said support structure, and for carrying the shuttle during vertical and/or horizontal movement of the load carrying means.

The load handing device according to the invention may easily switch between the situation in which it can lift payload, i.e. when the least one fork is in said first position, and the situation in which it can lift a shuttle, i.e. when the least one fork is in said second position. To receive a shuttle from the lane of the automated warehouse, the load carrying means is not to be repositioned in vertical direction to match the support structure's vertical position with the tracks or similar support on which the shuttle moves within the lane. The at least one fork is to be brought in its second position. When carrying payload to a level in the warehouse, the load carrying means is to be positioned in vertical direction at the very same height to enable delivering or receiving payload from this level from or to the warehouse. As such, no additional positions in the vertical direction are to be foreseen by the control system of the load handing device.

The load handing devices according to the invention are adapted to easily and conveniently move shuttles from or to one level, and optionally from one level to another level, within the automated warehouse. This moving of shuttled to and optionally between levels of the warehouse does provide little to no disturbance in the activity of the load handing devices displacing payload and does not disturb or complicate the control system controlling the warehouse activity.

For load handing devices having not this possibility of moving at least one fork or even both forks to a second position in which a support structure is provided being adapted for transferring the shuttle, the top surfaces of the, optionally extendible, forks and the load carrying surface of the shuttle are to contact the lower side of the payload at the same height. The top surface of the forks and the top surface of the shuttle typically may coincide. As such, the volume of the forks and the volume of the shuttle are always at the same or a similar vertical position. This prevents the forks to receive and lift the shuttle itself when the shuttle needs to be removed from the level, or needs to move to another level or lane, or another position in the warehouse in general, or needs to be taken out of the warehouse for e.g. maintenance. Lowering the load carrying means to allow the forks to lift up the shuttle by contacting the lower surface of the shuttle is an option, however the shuttle cannot be placed on ground level, since in that case, a cavity is to be foreseen at ground level of the warehouse to sink the lower part of the load carrying means in. Alternatively, the load carrying means may be provided with a void space under the forks for receiving the shuttle. The height of this void space is to be relatively large, since the whole shuttle is to be able to fit under the mechanism to move the forks, optionally to extend the forks, typically hanging directly under the forks. The load carrying means is to be lifted to level the support surface of this void space under the forks with the drive level of the shuttle at the level in the warehouse it is working on. But again, a cavity is needed at ground level of the warehouse to sink the framing structure of the void space under the forks in, when the load carrying means is brought at ground level for picking up a payload by the forks. Such cavities are cumbersome and a possible source of pollution and collection dirt. Further, in both cases, the load handing device needs to be able to stop and to be positioned or repositioned at additional vertical positions, which cause time losses of the load handing device and make the control of the load handing device more complex.

Hence the load handing devices according to the invention simplify the task of a load handing device, i.e. vertically and/or horizontally moving either payload or shuttles.

According to some embodiments, the forks may be extendible forks adapted to transfer carried payload from the load handing device into the at least one lane of the automated warehouse and vice versa.

The forks preferably are to be in their nonextended position when the one or both the forks are moved between a first position and a second position.

The forks are adapted to carry a payload, such as a pallet or boxes with goods. The forks are oriented to, and may possibly extend in a first horizontal direction, being a direction into the lane of the warehouse. By extending the extendible forks into the lane and displacing the forks vertically over a relatively small distance, the payload, e.g. the pallet or box, may be placed on a payload receiving means inside the lane. The shuttle, moving on e.g. tracks on this level in the lane of the warehouse, may position itself at least partially under said payload on the payload receiving means, and lift its load carrying surface or means, such that the payload is again lifted from the payload receiving means for carrying it inside the lane. The shuttle may carry the payload to its intended storage position inside the warehouse.

At least one of the two forks may be rotatable around a substantially horizontal axis perpendicular to the longitudinal direction of the fork, said horizontal axis being positioned at the side of the load carrying means most remote from the lane. At least one of the two forks may be rotatable around a substantially horizontal axis parallel to the longitudinal direction of the fork, the axis being positioned at the side of the fork most remote from the centre of the load carrying means. Possibly the forks each are rotatable around more than one axis, e.g. around a substantially horizontal axis parallel to the longitudinal direction of the fork and a substantially horizontal axis perpendicular to the longitudinal direction of the fork. At least one of the two forks may be horizontally moveable towards the side of the load carrying means, said side being closest to the fork and parallel to the longitudinal direction of the fork.

The movable fork may be mounted on e.g. threaded bars or rods, which is rotatable around its axis, the rotation being driven by a motor. The axis of this threaded bar may be perpendicular to the longitudinal direction of the fork, the plane of the longitudinal direction of the forks being parallel to the axis of the threaded bar. By rotating the threaded bar, the fork may move sideways, from and to the other fork.

According to some embodiments, each of said first and second fork may be moveable between a first position and a second position, when said forks both are in their first position, both forks together are adapted to carry a payload during the vertical and/or horizontal movement in the automated warehouse, when said forks both are in their second position, said forks providing the support structure adapted for transferring the shuttle from said at least one level of the lane and said support structure. According to some embodiments, a load handing device is provided, which load handling device is adapted to transport payload between levels of an automated warehouse. Each of said first and second fork may be moveable between a first position and a second position, when said forks both are in their first position, both forks together are adapted to carry a payload between levels of the automated warehouse, when said forks both are in their second position, said forks providing a support structure adapted for transferring the shuttle from the levels of the lane and said support structure, and for carrying the shuttle during vertical movement of the load carrying means.

Therefore, as according to the invention, enabling the forks to move to a second position, thereby providing a support structure adapted for transferring the shuttle from the level or levels of the lane on, and carrying the shuttle during vertical and/or horizontal movement of the load carrying means, the load handing device can continue to be used in the same way as for carrying payload, however now picking up a shuttle. No cavities are to be made at ground level of the warehouse.

The two forks may each be moveable between a first position and a second position. The movement to be made may be similar, identical or even totally different.

According to some embodiments, the first and/or second fork, optionally simultaneously, may be rotatable around a substantially horizontal axis perpendicular to the longitudinal direction of the fork, said horizontal axis being positioned at the side of the load carrying means most remote from the lane.

According to some embodiments, the first and/or second fork, optionally simultaneously, may be rotatable around a substantially horizontal axis parallel to the longitudinal direction of the fork, the axis being positioned at the side of the fork most remote from the centre of the load carrying means.

Possibly the forks each are rotatable around more than one axis, e.g. around a substantially horizontal axis parallel to the longitudinal direction of the fork and a substantially horizontal axis perpendicular to the longitudinal direction of the fork.

According to some embodiments, the first and/or second fork, optionally simultaneously, may be horizontally moveable towards the side of the load carrying means, said side being closest to the fork and parallel to the longitudinal direction of the fork.

The forks, optionally being extendible forks, may be mounted on e.g. threaded bars or rods, which are rotatable around their axis, the rotation being driven by a motor. The axes of these threaded bars may be perpendicular to the longitudinal direction of the forks, the plane of the longitudinal direction of the forks being parallel to the axes of these threaded bars. By rotating the threaded bars, the forks may move sideways, from and to each other.

According to some embodiments, the first and the second fork, optionally simultaneously, may be horizontally moveable towards the side of the load carrying means, said side being closest to the fork and parallel to the longitudinal direction of the fork, each of the forks is provided with profiled elongate bar to the inner side of the fork in longitudinal direction, profiled elongate bar having a flank extending inwards and being coplanar.

The flanks are preferably horizontal, i.e. parallel to the forks top surfaces when being in first position.

These flanks may provide two rails adapted to receive and carry the rotating means of the shuttle, which are used to move the shuttle in the lane.

Profiled elongate bar may be an L- or U-profiled profile mount to the inner side of the fork in longitudinal direction, the foot of the L-profile or the web of the U-profile extending inward.

The inner side of the fork is the longitudinal side of the fork oriented towards the other of the two forks. Inwards means directed towards the other of the two forks.

The L-profile may be lipped, i.e. further comprise a small flank at the extremum of the foot, being raised in direction of the leg of the L-profile. As such a small gutter-shape is formed.

The feet of the L-profiles or the webs of the U-profile may provide two rails adapted to receive and carry the rotating means of the shuttle, which are used to move the shuttle in the lane.

Each of the one or more levels of the lane may be provided with similar carrying surfaces to carry the shuttle by means of the rotating means, like wheels, of the shuttle. When the load handing device is positioned at the height of the level of the lane, the flanks of the profiled elongate bars providing two rails adapted to receive and carry the rotating means of the shuttle and the carrying surface of the lane may be coplanar when the fork or forks are in their second position, while the top surfaces of the forks are adapted to deliver a payload in the lane of the warehouse if the fork or forks were in their first position.

As an alternative, the forks may be moveable from a first position vertically upwards relative to the rest of the load carrying means, to the second position, thereby freeing a void space under the forks and optionally their moving system, which void is adapted to receive the shuttle.

According to a second aspect of the invention, an automated warehouse is provided, the automated warehouse comprising at least one lane with at least one, and preferably a plurality of levels, said warehouse being equipped with at least one shuttle adapted to move in horizontal direction on at least one, and preferably a plurality of levels of the lane, said warehouse comprising at least one load handing device according to any one of the preceding claims. Optionally, an automated warehouse is provided, the automated warehouse comprises at least one lane with a plurality of levels, said warehouse being equipped with at least one shuttle adapted to move in horizontal direction on different levels of the lane, said warehouse comprising at least one load handing device according to any one of the preceding claims.

According to some embodiments, the lanes may comprise comprises a plurality of levels, the lanes may comprise a plurality of pairs horizontal beams, for each pair of beams, the two beams are at the same height in the lane, each of said beams comprise a first flank for receiving payload from forks, and a second flank for providing a track for supporting said shuttle and enabling the shuttle to move in said lane at said level, said second flank being positioned vertically lower than said first flank.

The load handing device is adapted to provide a support structure adapted for receiving or providing the shuttle from or to any one of the one or more levels of the lane and carrying the shuttle during vertical and/or horizontal movement of the load carrying means, e.g. vertically between the two levels. This support structure is preferably positional coplanar with the tracks of each pair of beams of the lane. The load handing device being moved to a height such that, when its forks would be in the first position hence being able to provide a payload to the lane at a level of the lane, but having its fork or forks positioned in the second position, is arranged such that the shuttle may pass, e.g. move, from the track on the support structure and vice versa.

As such, the load handing device is to be moved to one, and optionally more than one, such as any of the distinct levels of the lane, in order to either deliver or receive a payload to or from the level of the lane when having its fork or its forks in the first position, or to deliver or receive a shuttle to or from said level of the lane when having its fork or forks in the second position. As such no different heights are to be provided or calculated for the load handing device to move to, in order to have either a payload or a shuttle to be moved into or out of a level of the lane. This simplifies the control of the load handing device, and hance of the automated warehouse.

According to some embodiments, the automated warehouse may be a warehouse for storing goods on pallets.

According to some embodiments, the automated warehouse may comprise two or more racks, and one or more lanes, each lane being provided between two adjacent racks.

According to some embodiments, the automated warehouse may comprise one or more of said at least one load handing device for supplying goods to or from the, optionally each lane.

According to some embodiments, the warehouse may comprise at least one lane, said at least one load handing device is provided at the end of said lane.

According to some embodiments, the warehouse may comprise at least one lane, said at least one load handing device is provided at a position within said lane.

According to a third aspect of the invention, the load handing device according to the first aspect of the invention is used in an automated warehouse.

Features of one aspect of the present invention may be combined with features of one or more of the other aspects of the invention.

### Brief Description of the Drawings

Fig. 1 illustrates schematically a load handing device according to the invention, carrying a payload.
Fig. 2 illustrates schematically the load handing device of figure 1, being in a first position fit for carrying a payload.
Fig. 3 illustrates schematically a load handing device of figure 1, being in a second position carrying a shuttle.
Fig. 4 illustrates schematically an automated warehouse according to the invention.

In the different figures, the same reference sign refers to the seme or a similar feature.

### Detailed Description of Embodiment(s)

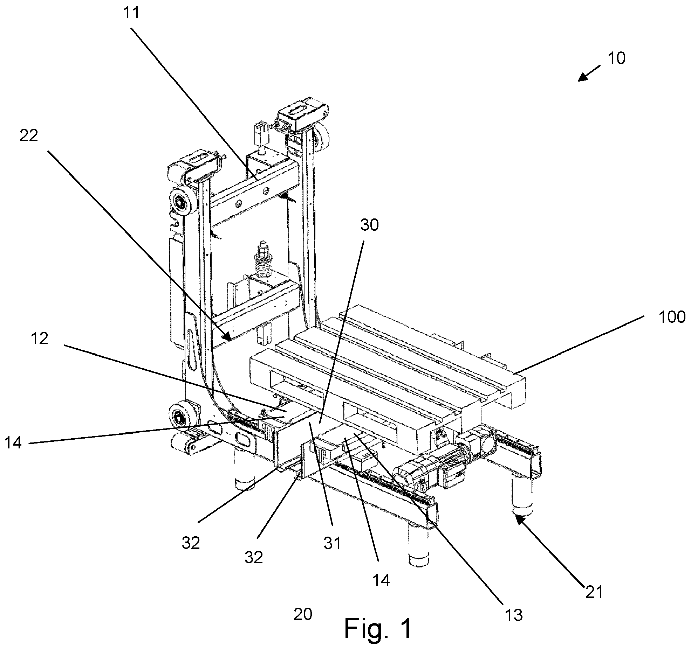

A load handing device 10 according to the invention is shown in figures 1, 2 and 3. The load handling device 10, which may e.g. be a stacker crane, is adapted to transport payload 100 between levels of an automated warehouse comprising at least one lane with a plurality of levels and being equipped with at least one shuttle adapted to move in horizontal direction on different levels of the lane. The load handing device 10 comprises a load carrying means 11 adapted to move in the vertical direction. The load carrying means 11 is provided with at least a first and a second fork 12 and 13. The two forks 12 and 13 are moveable between a first position and a second position.

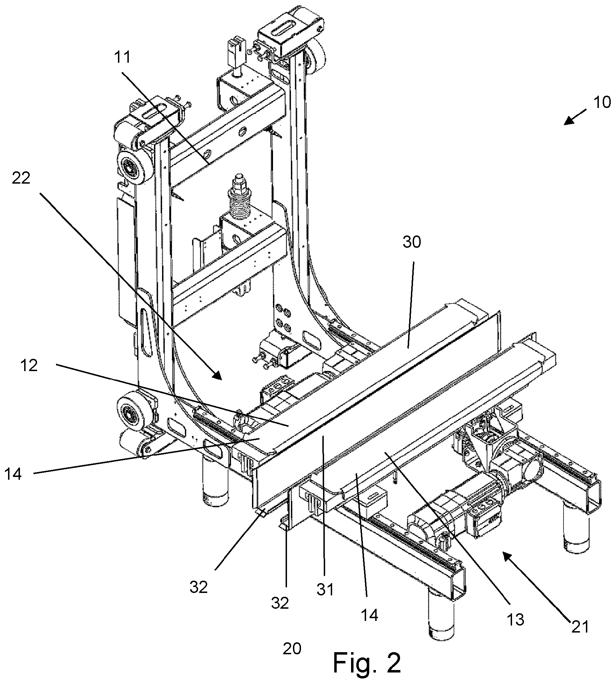

As shown in figure 1 and 2, when the forks 12 and 13 are in a first position, both forks together are adapted to carry a payload 100 between levels of the automated warehouse. The two forks 12 and 13 in this first position may load e.g. a pallet. The top surfaces 14 of the forks 12 and 13 carry the payload, e.g. a pallet.

The two forks 12 and 13 are extendible or "telescoping" forks and may extend in their longitudinal direction to one or to both sides of the load carrying means 11. As such, in one or both of these directions, may transfer carried payload from or into a lane of the automated warehouse at different levels in the warehouse.

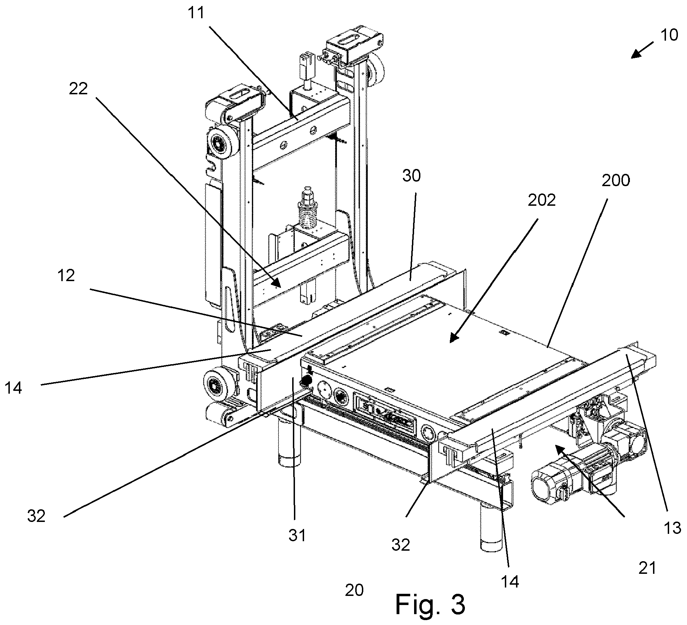

Both forks 12 and 13 are moveable, each to a second position, as shown in figure 3. The forks may horizontally move to the lateral sides 21 and 22 of the load carrying means 11, more particularly to the lateral side closest to the fork. The forks 12 and 13 are provided with a profiled support 30, such as an L-profiled profile, having an upright flank 31 and a substantially horizontal flank 32 oriented towards the opposite fork. When the two forks are in the mutually remote position as shown in figure 3, the two horizontal flanks 32 provide two rials to allow the driving wheels of the shuttle 200 to be supported by these rails. The top surface 202 of the shuttle may be substantially coplanar with the top surfaces 14 of the forks, or as shown in figure 3, the top surface 202 of the shuttle may be located under the plane provided by the top surfaces 14 of the forks. Hence the shuttle fits in a volume under the forks, i.e. a volume defined by the upright flanks 31, the substantially horizontal flanks 32 oriented towards the opposite fork and the top surface 34 of the forks.

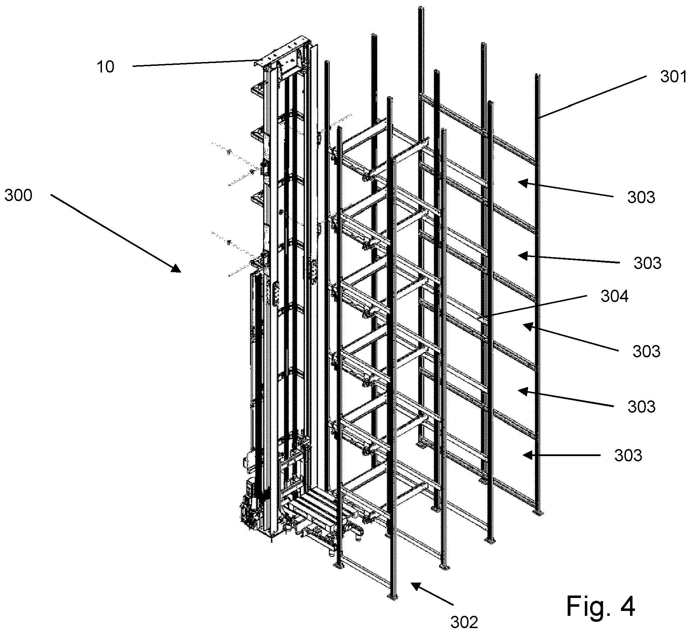

As shown in figure 4, an automated warehouse 300 includes a relatively large storage structures 301 structured along a plurality of substantially parallel lanes 302 and a plurality of levels 303 within the storage structure 301. A part of said automated warehouse 300 is shown in figure 4. The storage structure comprises a track system 304 including at least one pair of rails arranged in a substantially horizontal plane along a lane of the warehouse. Optionally transverse aisles may connect the parallel lanes, which aisles or transverse lanes optionally being provided with tracks to enable shuttles 200 to pass from one lane to another. the automated shuttles system comprises a plurality of automated shuttles which are integrated into, and controlled by, a central warehouse management control system.

The automated warehouse 300 includes at least one, and optionality at at least one end of each lane 302, a load handing device 10 as shown in figures 1 to 3. The shuttles 200 may be taken out of or provided into the warehouse by means of these load handling devices 10.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A load handing device adapted to transport payload in an automated warehouse comprising at least one lane with at least one level and being equipped with at least one shuttle adapted to move in horizontal direction on said at least one level of the lane, said load handing device comprises a load carrying means adapted to move in the vertical and/or horizontal direction, said load carrying means being provided with at least a first and a second fork, wherein said load carrying means being provided with a support structure adapted to carry the shuttle during the vertical and/or horizontal movement of the load carrying means, at least one of the two forks is moveable between a first position and a second position, when said at least one of the two forks is in said first position, both forks together are adapted to carry a payload to said at least one level of the automated warehouse, when said at least one of the two forks is in said second position, said forks enabling said support structure to receive a shuttle from said at least one level of an automated warehouse.

2. A load handing device according to claim 1, wherein the forks are extendible forks adapted to transfer carried payload from the load handing device into said at least one lane of the automated warehouse and vice versa.

3. A load handing device according to any one of the claims 1 to 2, wherein each of said first and second fork is moveable between a first position and a second position, when said forks both are in their first position, both forks together are adapted to carry a payload during the vertical and/or horizontal movement in the automated warehouse, when said forks both are in their second position, said forks providing the support structure adapted for transferring the shuttle from said at least one level of the lane and said support structure.

4. A load handing device according to claim 3, wherein the first and/or second fork, optionally simultaneously, is rotatable around a substantially horizontal axis perpendicular to the longitudinal direction of the fork, said horizontal axis being positioned at the side of the load carrying means most remote from the lane.

5. A load handing device according to claim 3, wherein the first and/or second fork, optionally simultaneously, is rotatable around a substantially horizontal axis parallel to the longitudinal direction of the fork, the axis being positioned at the side of the fork most remote from the centre of the load carrying means.

6. A load handing device according to any one of the claims 3 to 5, wherein the first and/or second fork, optionally simultaneously, is horizontally moveable towards the side of the load carrying means, said side being closest to the fork and parallel to the longitudinal direction of the fork.

7. A load handing device according to claim 6, wherein the first and the second fork, optionally simultaneously, are horizontally moveable towards the side of the load carrying means, said side being closest to the fork and parallel to the longitudinal direction of the fork, each of the forks is provided with profiled elongate bar to the inner side of the fork in longitudinal direction, profiled elongate bar having a flank extending inwards and being coplanar.

8. An automated warehouse comprising at least one lane with at least one, and preferably a plurality of levels, said warehouse being equipped with at least one shuttle adapted to move in horizontal direction on at least one, and preferably a plurality of levels of the lane, said warehouse comprising at least one load handing device according to any one of the preceding claims.

9. An automated warehouse according to claim 8, wherein said lanes comprises a plurality of levels, said lane comprises a plurality of pairs horizontal beams, for each pair of beams, the two beams are at the same height in the lane, each of said beams comprise a first flank for receiving payload from forks, and a second flank for providing a track for supporting said shuttle and enabling the shuttle to move in said lane at said level, said second flank being positioned vertically lower than said first flank.

10. An automated warehouse according to any one of the claims 8 to 9, wherein said automated warehouse is a warehouse for storing goods on pallets.

11. An automated warehouse according to any one of the claims 8 to 10, wherein said automated warehouse comprises two or more racks, and one or more lanes, each lane being provided between two adjacent racks.

12. An automated warehouse according to any one of the claims 8 to 11, wherein said automated warehouse comprises one or more of said at least one load handing device for supplying goods to or from each lane.

13. An automated warehouse according to any one of the claims 8 to 12, wherein said warehouse comprises at least one lane, said at least one load handing device is provided at the end of said lane.

14. An automated warehouse according to any one of the claims 8 to 13, wherein said at least one load handing device is provided at a position within said lane.

15. The use of a load handing device according to any one of the claims 1 to 7 in an automated warehouse.
